# EUROPÄISCHE PATENTSCHRIFT

(11) **EP 0 766 613 B1**
(45) Veröffentlichungstag und Bekanntmachung des Hinweises auf die Patenterteilung: **04.09.2002**
(21) Anmeldenummer: 96907940.9
(22) Anmeldetag: 29.03.1996
(51) Int. Cl.: B28D 1/08, B23D 57/00

(54) **VORRICHTUNG ZUR SÄGESEILFÜHRUNG**
SAW CABLE GUIDING DEVICE
DISPOSITIF POUR GUIDAGE DE FIL DE SCIE

(30) Priorität: 18.04.1995 AT 65795
(43) Veröffentlichungstag der Anmeldung: 09.04.1997
(73) Patentinhaber: Plattner, Josef, 6200 Gallzein (AT)
(72) Erfinder: Plattner, Josef, 6200 Gallzein (AT)
(74) Vertreter: Torggler, Paul Norbert, Dr.
(86) Internationale Anmeldenummer: AT9600062
(87) Internationale Veröffentlichungsnummer: WO96033058

(56) Entgegenhaltungen:
- WO-A-95/18692
- WO-A-95/28263
- US-A- 2 577 523
- US-A- 4 765 307
- US-A- 5 060 628

## Beschreibung

Die Erfindung bezieht sich auf eine Vorrichtung zur Seilführung für Seilsägeanlagen zum Sägen von Werkstücken aus Beton, Mauerwerk, Naturstein und dergleichen mittels eines Sägeseils, gemäß dem Oberbegriff des Anspruchs 1 bzw. 2. Aus der US-A 2577523 ist eine derartige Vorrichtung bekannt geworden, bei der die Hohlachse vertikal verläuft und an der Stütze befestigt ist. Trotz des in einer Ausführung möglichen Schwenkwinkels von 360° sind die Ver- und Einstellmöglichkeiten begrenzt.

Die US-A 5060628 zeigt eine Vorrichtung zur Seilführung bestehend aus einem zweiteiligen Gestell und je einem Rollenpaar für den Seileintritt und den Seilaustritt. Ein Gestellteil ist um eine vertikale Achse verschwenkbar, sodaß das Seil über Eck geführt werden kann.

Ziel der Erfindung ist es, eine kompakte Vorrichtung zur Seilführung zur Erreichbarkeit aller geometrischen Schnittebenen und aller Winkel des Sägeseils zur Seilsägemaschine zu schaffen. Die Seilsägemaschine muß für verschiedene Schnitte jeweils nicht umgerüstet werden, wenn sie, wie in der nachveröffentlichten Anmeldung WO-A 95/18692 gezeigt, je eine Schwenkrolle zur Führung des ein- und auslaufenden Sägeseils aufweist. Weiters sollen auch Bündigschnitte in allen Ebenen und Winkeleinstellungen durchgeführt werden können.

Erfindungsgemäß wird dies durch die Merkmalskombination des Anspruchs 1 bzw. 2 erreicht.

Eine Gesamtanlage, in der sich durch Spannen des Sägeseils die Winkeleinstellungen aller Schwenkrollen automatisch einrichten, wird dadurch erreicht, daß an beiden freien Enden des Querträgers mittig je eine Hohlachse drehbar und arretierbar vorgesehen ist, die jeweils zwei um 360° drehbare und arretierbare Schwenkgehäuse mit Rollen tragen, wobei der Querträger und die beiden Hohlachsen H-förmig angeordnet sind.

Somit ist eine kleine, leichte und schnell ummontierbare Vorrichtung für verschiedene Schnitte gegeben, ohne daß die schwere Seilsägemaschine ständig ummontiert und justiert werden muß, was auch eine wesentliche Erleichterung für das Bedienpersonal darstellt. Um die Sicherheit des Bedienpersonal gegenüber Seilrissen wesentlich zu erhöhen, ist in einer bevorzugten Ausführung vorgesehen, daß teleskopartige Schutzrohre als Abdeckung für die freien Seillängen zwischen der Vorrichtung und der Seilsägemaschine an den Achsen der Rollen befestigbar sind.

Die Erfindung wird anhand der folgend zusammengefaßten Abbildung der Zeichnung beschrieben. Es zeigen
- Figur 1: eine erfindungsgemäße Vorrichtung zur Seilführung in Vorderansicht
- Figur 2: eine erfindungsgemäße Vorrichtung zur Seilführung in Draufsicht
- Figur 3: eine erfindungsgemäße Vorrichtung zur Seilführung in Seitenansicht
- Figur 4: eine Seilsägeanlage mit erfindungsgemäßer Vorrichtung zur Seilführung in Seitenansicht
- Figur 5: eine Seilsägeanlage mit erfindungsgemäßer Vorrichtung zur Seilführung in Draufsicht
- Figur 6: eine Vorrichtung zur Seilführung in Stellung für Bündigschnitt in Draufsicht mit werkstückseitig frei schwenkenden Schwenkgehäusen mit Rollen und maschinenseitig arretierten Schwenkgehäusen mit Rollen
- Figur 7: eine Vorrichtung gemäß Fig. 6 in Seitenansicht
- Figur 8: eine Vorrichtung zur Seilführung für ein Seil mit zwei Schwenkgehäusen mit Rollen in Seitenansicht
- Figur 9: die Vorrichtung gemäß Fig. 8 in Draufsicht, und
- Figur 10: eine erfindungsgemäße Vorrichtung zur Seilführung mit Seilsägemaschine, wobei die freien Seillängen zwischen Vorrichtung und Seilsägemaschine mit teleskopartigen Schutzrohren, die an den Achsen der Rollen befestigt werden, abgedeckt sind.

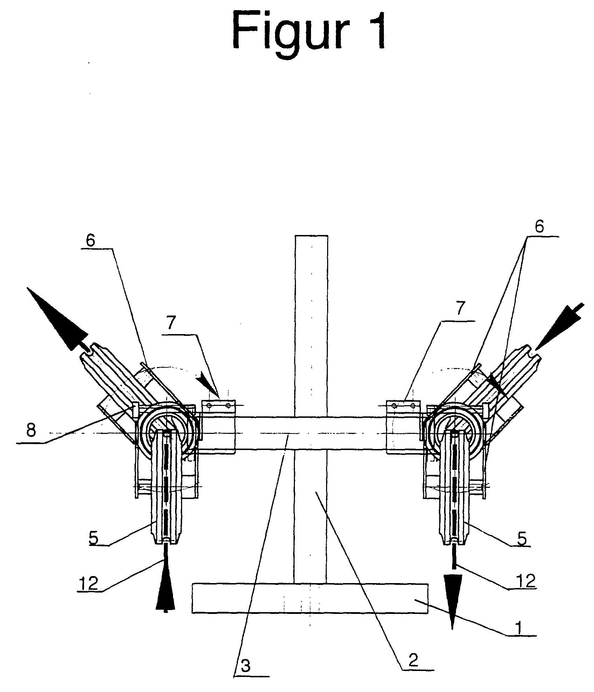

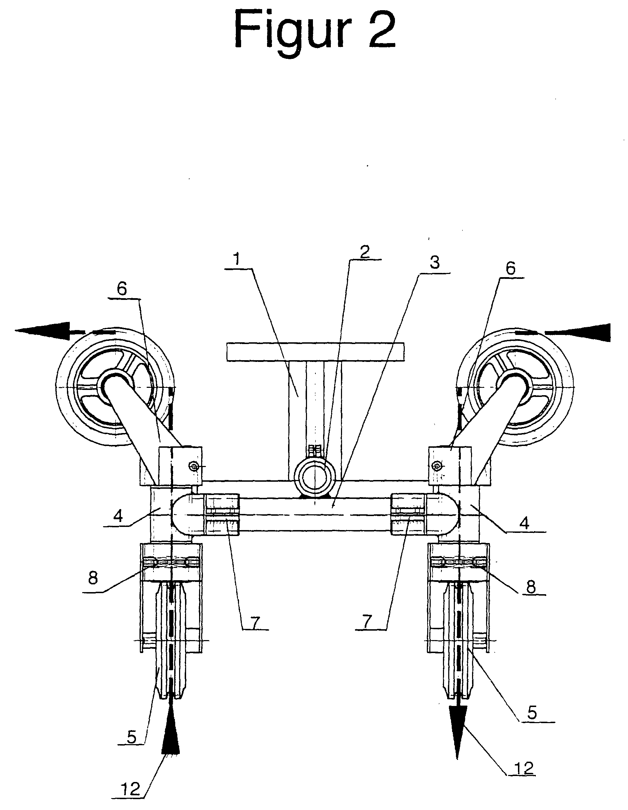

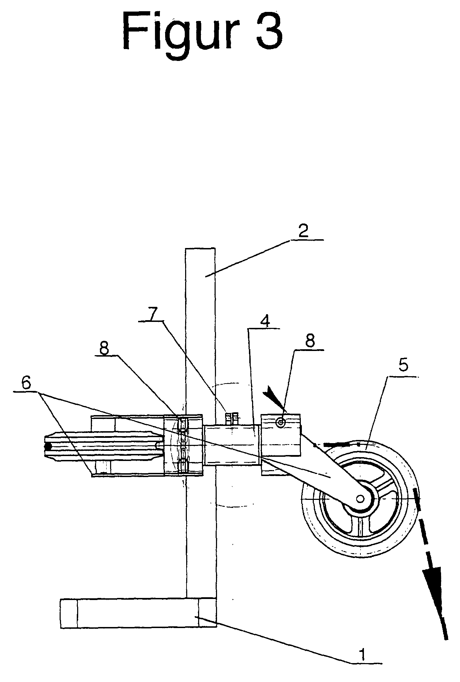

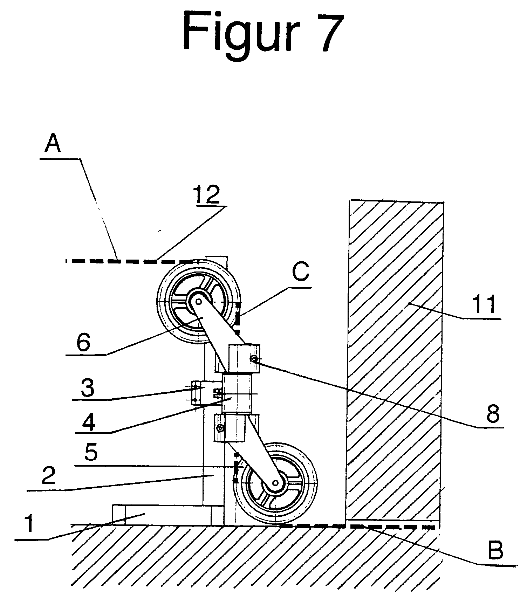

Eine Vorrichtung zur Sägeseilführung besteht gemäß Fig. 1 bis 7 aus einer Fußplatte 1, einem daran angeschweißten oder geschraubten Stiel 2 und einer höhenverstellbaren, arretierbaren Schelle mit einem Querträger 3. An den freien Enden des Querträgers 3 sind zu einer H-Form ergänzend, Hohlachsen 4 drehbar gelagert, deren Schwenkachsen in der Achse des Querträgers 3 liegen. An den freien Enden beider Hohlachsen 4 sind jeweils zwei um 360° schwenkbar und arretierbar angebrachte Schwenkgehäuse 6 mit Rollen 5 angeordnet. Die Schwenkachsen der Schwenkgehäuse 6 liegen in den Achsen der Hohlachsen 4. Die Hohlachsen 4 sind mit einer Klemmvorrichtung 7 und die Schwenkgehäuse 6 mit Rollen 5 ebenfalls mit einer Arretiervorrichtung 8 versehen.

Verursacht wird das gefundene und vorteilhafte Verhalten der Seilführungsvorrichtung durch die um 360° dreh- und arretierbaren Schwenkgehäuse 6 mit Rollen 5 und die ebenfalls um 360° dreh- und arretierbaren Hohlachsen 4.

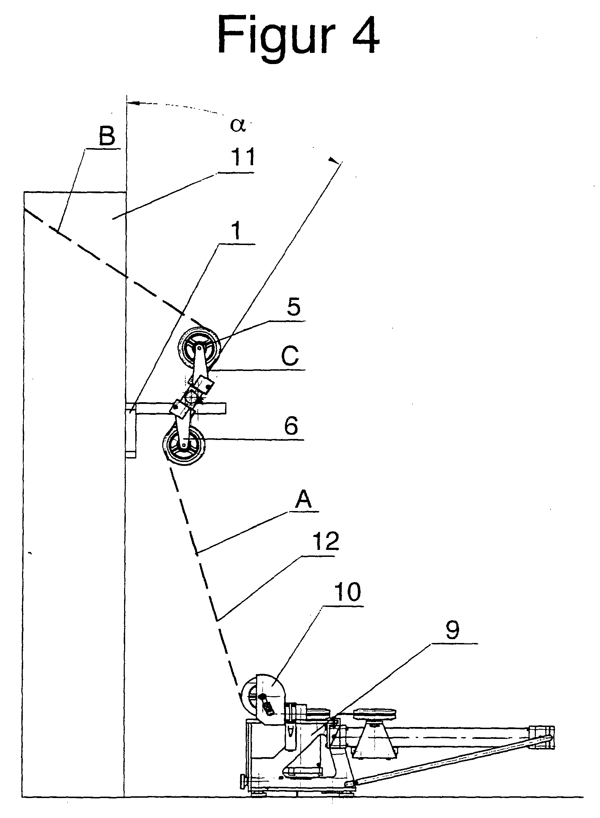

Dadurch werden im Vergleich zu den Vorrichtungen zur Seilführung nach dem Stand der Technik alle Seillaufebenen A, B, C und Winkel α zum Werkstück 11 und vorzugsweise auch zur Seilsägemaschine 9 möglich, wenn an deren Seilein- und -ausgang ebenfalls jeweils ein Schwenkgehäuse mit Rolle 10 angebracht ist (Fig. 4)

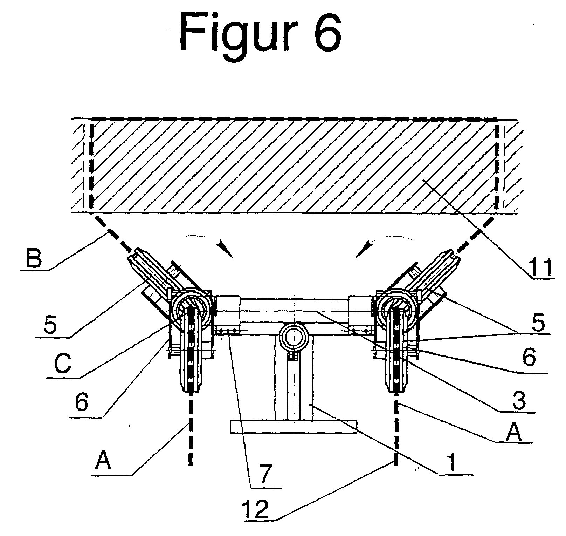

Eine weitere Ausführung des Erfindungsgedankens der Seilführung wird in Fig. 6 beschrieben. Sie zeigt eine erfindungsgemäße Vorrichtung zur Seilführung in Stellung für Bündigschnitte mit frei schwenkenden werkstückseitigen Schwenkgehäusen 6 mit Rollen 5 und arretierten maschinenseitigen Schwenkgehäusen 6 mit Rollen 5.

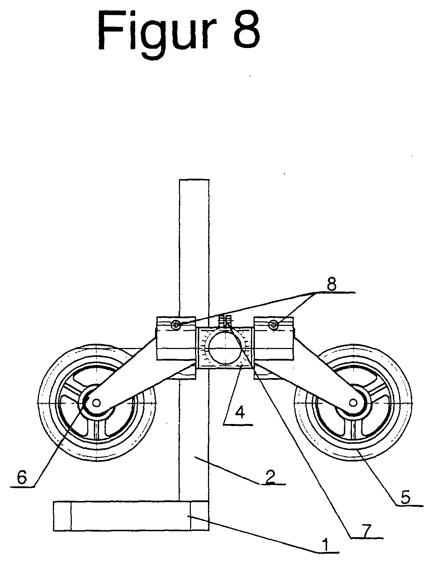

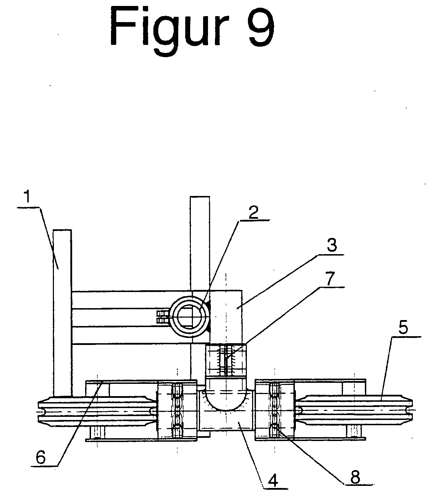

Eine weitere Ausführung des Erfindungsgedankens der Seilführung wird in den Fig. 8 und 9 beschrieben. Dabei sind jeweils eine eigene Fußplatte 1 mit Stiel 2 und eine höhenverstellbar und drehbar arretierbare Schelle mit Querträger 3 pro Hohlachse 4 vorgesehen, an der werkstückseitig ein Schwenkgehäuse 6 mit Rolle 5 und maschinenseitig ein Schwenkgehäuse 6 mit Rolle 5 gelagert sind. Mehrere dieser Vorrichtungen können für große Seilsägearbeiten in Steinbrüchen oder Minen usw. eingesetzt werden, es sind jedoch für eine Seilsägeanlage mindestens zwei solcher Vorrichtungen zur Seilführung gemäß den Fig. 8 und 9 notwendig.

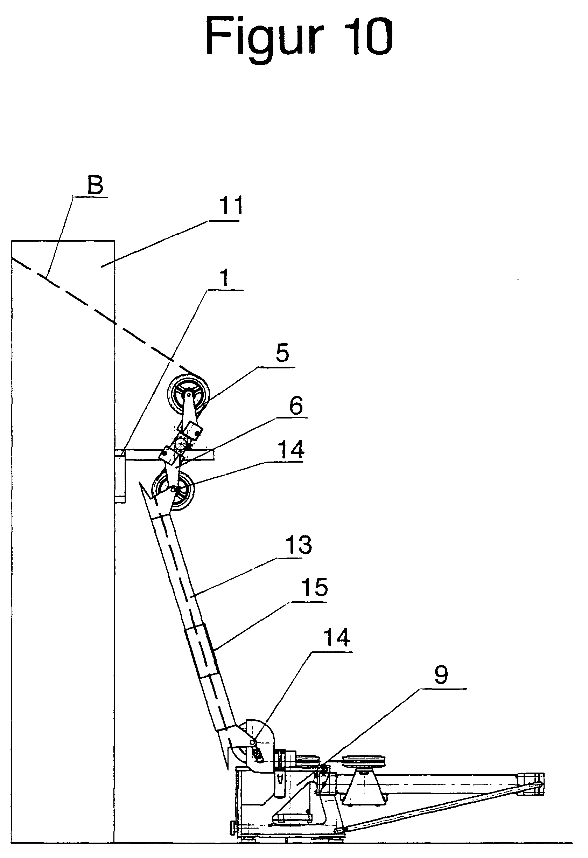

Eine weitere Ausführung des Erfindungsgedankens wird in Fig. 10 beschrieben. Dabei werden die freien Seillängen 13 zwischen der Vorrichtung und der Maschine 9 mit teleskopartigen Rohren 15 abgedeckt, die an den Achsen 14 der Rollen 5 befestigt werden, um das Bedienungspersonal bei Seilrissen zu schützen.

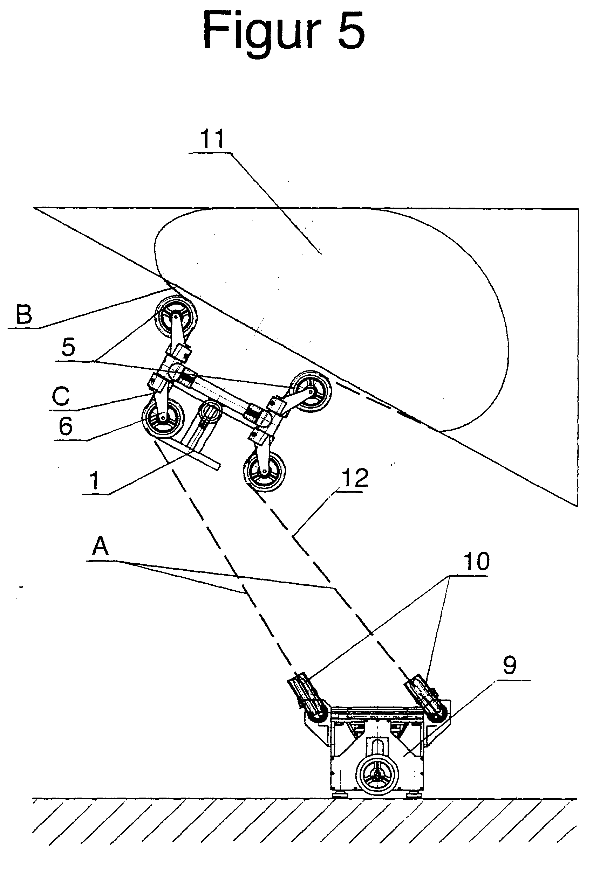

Die erfindungsgemäße Vorrichtung zur Seilführung ist sowohl gemäß Fig. 4 oder 6 mit frei beweglichen Schwenkgehäusen 6 als auch gemäß Fig. 5 mit arretierbaren Schwenkgehäusen 6 einsetzbar.

### LISTE DER VERWENDETEN BEZUGSZEICHEN

(1) Fußplatte
(2) Stiel
(3) Klemmschelle mit Querträger
(4) Hohlachse
(5) Rolle
(6) Schwenkgehäuse
(7) Klemmvorrichtung der Hohlachsen
(8) Arretiervorrichtung des Schwenkgehäuses mit Rolle
(9) Seilsägemaschine
(10) Schwenkgehäuse mit Rolle an der Seilsägemaschine
(11) Werkstück
(12) Sägeseil
(13) Freie Seillängen zwischen Vorrichtung zur Seilführung und der Maschine
(14) Achsen der Rollen
(15) Teleskopartige Schutzrohre

A Seillaufebene zur Seilsäge
B Seillaufebene zum Werkstück
C Seillaufebene zwischen den Schwenkgehäusen mit Rollen
α Einstellwinkel der Hohlachsen

## Patentansprüche

1. Vorrichtung zur Seilführung für Seilsägeanlagen zum Sägen von Werkstücken (11) aus Beton, Mauerwerk, Naturstein und dergleichen mittels eines Sägeseils (12), mit einer Fußplatte (1), mit einer von der Fußplatte (1) hochstehenden Stütze (2) für eine Hohlachse (4), und mit zwei Schwenkgehäusen (6), die an den beiden freien Enden der Hohlachse (4) jeweils einzeln drehbar und arretierbar sind, und in denen je eine Rolle (5) gelagert ist, wobei die eine Rolle zur Führung des ein- bzw. auslaufenden Sägeseils (12) zur Seilsägemaschine (9) und die zweite Rolle zur Führung des aus- bzw. einlaufenden Sägeseils (12) zum Werkstück (11) vorgesehen ist, **dadurch gekennzeichnet, daß** auf der als Stiel ausgebildeten Stütze (2) ein Querträger (3) mittels einer Schelle höhenverstellbar arretierbar ist, daß die Hohlachse (4) mittig am freien Ende des Querträgers (3) um 360° um die Achse des Querträgers (3) verdrehbar gelagert und in einem beliebigen Winkel zum Werkstück arretierbar ist, und daß jedes Schwenkgehäuse (6) um 360° drehbar am Ende der Hohlachse (4) gelagert ist.

2. Vorrichtung zur Seilführung für Seilsägeanlagen zum Sägen von Werkstücken (11) aus Beton, Mauerwerk, Naturstein und dergleichen mittels eines Sägeseils (12), mit einer Fußplatte (1), mit einer von der Fußplatte (1) hochstehenden Stütze (2) für eine Hohlachse (4), und mit zwei Schwenkgehäusen (6), die an den beiden freien Enden der Hohlachse (4) jeweils einzeln drehbar und arretierbar sind und in denen je eine Rolle (5) gelagert ist, wobei die eine Rolle zur Führung des ein- bzw. auslaufenden Sägeseils (12) zur Seilsägemaschine (9) und die zweite Rolle zur Führung des aus- bzw. einlaufenden Sägeseils (12) zum Werkstück (11) vorgesehen ist, **dadurch gekennzeichnet, daß** auf der als Stiel ausgebildeten Stütze (2) ein Querträger (3) mittels einer Schelle höhenverstellbar arretierbar ist, daß die Hohlachse (4) mittig am freien Ende des Querträgers (3) angeordnet ist, daß jedes Schwenkgehäuse (6) um 360° drehbar am Ende der Hohlachse (4) gelagert ist und daß ein Gelenk zwischen der Fußplatte (1) und dem Stiel (2) vorgesehen ist.

3. Vorrichtung zur Seilführung nach Anspruch 1 oder 2, **dadurch gekennzeichnet, daß** je eine Hohlachse (4) mittig an beiden freien Enden des Querträgers (3) vorgesehen ist, und jede Hohlachse (4) zwei um 360° drehbare und arretierbare Schwenkgehäuse (6) mit Rollen (5) trägt, wobei der Querträger (3) und die beiden Hohlachsen (4) H-förmig angeordnet sind.

4. Vorrichtung nach einem der Ansprüche 1 bis 3, **dadurch gekennzeichnet, daß** als Hohlachse (4) ein Montagegestell mit separaten Lagern für die beiden Schwenkgehäuse (6) am Querträger angeordnet ist.

5. Vorrichtung nach einem der Ansprüche 1 bis 4, **dadurch gekennzeichnet, daß** teleskopartige Schutzrohre (15) vorgesehen sind, welche zur Abdeckung für das ein- und auslaufende Sägeseil zur Seilsägemaschine (9) an den Achsen (14) der Rollen (5) befestigbar sind.

## Claims

1. Apparatus for cable guidance for cable sawing installations for sawing workpieces (11) of concrete, masonry, natural stone and the like, by means of a sawing cable (12), with a base plate (1), a support (2) upstanding from the base plate (1) for a hollow shaft (4), and two pivotal housings (6) which are respectively individually rotatable and arrestable at the two free ends of the hollow shaft (4) and in each of which is mounted a respective roller (5), wherein the one roller is provided to guide the incoming and outgoing sawing cable (12) in relation to the cable sawing machine (9) and the second roller is provided for guiding the outgoing and incoming sawing cable (12) in relation to the workpiece (11), **characterised in that** a transverse carrier (3) is height-adjustably arrestable by means of a clamp on the support (2) which is in the form of a column, that the hollow shaft (4) is mounted centrally at the free end of the transverse carrier (3) rotatably through 360° about the axis of the transverse carrier (3) and is arrestable at any angle relative to the workpiece, and that each pivotal housing (6) is mounted at the end of the hollow shaft (3) rotatably through 360°.

2. Apparatus for cable guidance for cable sawing installations for sawing workpieces (11) of concrete, masonry, natural stone and the like, by means of a sawing cable (12), with a base plate (1), a support (2) upstanding from the base plate (1) for a hollow shaft (4), and two pivotal housings (6) which are respectively individually rotatable and arrestable at the two free ends of the hollow shaft (4) and in each of which is mounted a respective roller (5), wherein the one roller is provided to guide the incoming and outgoing sawing cable (12) in relation to the cable sawing machine (9) and the second roller is provided for guiding the outgoing and incoming sawing cable (12) in relation to the workpiece (11), **characterised in that** a transverse carrier (3) is height-adjustably arrestable by means of a clamp on the support (2) which is in the form of a column, that the hollow shaft (4) is arranged centrally at the free end of the transverse carrier (3), that each pivotal housing (6) is mounted at the end of the hollow shaft (3) rotatably through 360° and that a pivot is provided between the base plate (1) and the column (2).

3. Apparatus for cable guidance according to claim 1 or claim 2 **characterised in that** there is provided a respective hollow shaft (4) centrally at both free ends of the transverse carrier (3) and each hollow shaft (4) carries two pivotal housings (6) with rollers (5), the housings being rotatable through 360° and arrestable, wherein the transverse carrier (3) and the two hollow shafts (4) are arranged in an H-shape.

4. Apparatus according to one of claims 1 to 3 **characterised in that** a mounting frame with separate bearings for the two pivotal housings (6) is arranged as the hollow shaft (4) on the transverse carrier.

5. Apparatus according to one of claims 1 to 4 **characterised in that** there are provided telescopic protective tubes (15) which for covering for the incoming and outgoing sawing cable in relation to the cable sawing machine (9) can be fixed to the shafts (14) of the rollers (5).

## Revendications

1. Dispositif de guidage de fil pour des installations de sciage à fil destinées à scier des pièces (11) de béton, de maçonnerie, de pierre naturelle, etc. à l'aide d'un fil de sciage (12), comportant un socle (1), un support (2) dressé sur le socle et destiné à un axe creux (4), et deux carters pivotants (6) qui sont aptes à pivoter et à être arrêtés individuellement aux deux extrémités libres de l'axe creux (4) et dans lesquels sont montées deux poulies respectives (5), une première poulie étant destinée à guider le fil de sciage entrant ou sortant (12) par rapport à la machine de sciage à fil (9) tandis que la seconde poulie est destinée à guider le fil de sciage sortant ou entrant (12) par rapport à la pièce (11), **caractérisé en ce qu'**une traverse (3) est apte à être arrêtée en étant réglable en hauteur à l'aide d'une bride, sur le support (2) conçu comme un montant, **en ce que** l'axe creux (4) est monté de manière centrée sur l'extrémité libre de la traverse (3) pour pouvoir pivoter de 360° autour de l'axe de ladite traverse (3) et est apte à être arrêté suivant n'importe quel angle par rapport à la pièce, et **en ce que** chaque carter pivotant (6) est monté sur l'extrémité de l'axe creux (4) pour pouvoir pivoter de 360°.

2. Dispositif de guidage de fil pour des installations de sciage à fil destinées à scier des pièces (11) de béton, de maçonnerie, de pierre naturelle, etc. à l'aide d'un fil de sciage (12), comportant un socle (1), un support (2) dressé sur le socle et destiné à un axe creux (4), et deux carters pivotants (6) qui sont aptes à pivoter et à être arrêtés individuellement aux deux extrémités libres de l'axe creux (4) et dans lesquels sont montées deux poulies respectives (5), une première poulie étant destinée à guider le fil de sciage entrant ou sortant (12) par rapport à la machine de sciage à fil (9) tandis que la seconde poulie est destinée à guider le fil de sciage sortant ou entrant (12) par rapport à la pièce (11), **caractérisé en ce qu'**une traverse (3) est apte à être arrêtée en étant réglable en hauteur à l'aide d'une bride, sur le support (2) conçu comme un montant, **en ce que** l'axe creux (4) est monté de manière centrée sur l'extrémité libre de la traverse (3), **en ce que** chaque carter pivotant (6) est monté sur l'extrémité de l'axe creux (4) pour pouvoir pivoter de 360° et **en ce qu'**une articulation est prévue entre le socle (1) et le montant (2).

3. Dispositif de guidage de fil selon la revendication 1 ou 2, **caractérisé en ce qu'**un axe creux (4) est prévu de manière centrée à chaque extrémité libre de la traverse (3) et chaque axe creux (4) porte deux carters pivotants (6) qui sont aptes à pivoter de 360° et à être arrêtés et qui sont pourvus de poulies (5), la traverse (3) et les deux axes creux (4) étant disposés en H.

4. Dispositif selon l'une des revendications 1 à 3, **caractérisé en ce qu'**on dispose comme axe creux (4) sur la traverse un châssis de montage avec des paliers séparés pour les deux carters pivotants (6).

5. Dispositif selon l'une des revendications 1 à 4, **caractérisé en ce qu'**il est prévu des tubes de protection télescopiques (15) qui sont aptes à être fixés aux axes (14) des poulies (5) pour couvrir le câble de sciage entrant et sortant par rapport à la machine de sciage à fil (9) .
